# EUROPEAN PATENT APPLICATION

(11) **EP 4 657 879 A1**
(43) Date of publication of application: **03.12.2025**
(21) Application number: 23918213.2
(22) Date of filing: 09.11.2023
(51) Int. Cl.: H04Q 11/00

(54) **OPTICAL SPLITTER OF PASSIVE OPTICAL NETWORK AND OPTICAL SIGNAL PROCESSING METHOD**

(30) Priority: 28.01.2023 CN 202310042413; 28.01.2023 CN 202310912284
(71) Applicant: ZTE CORPORATION, Shenzhen, Guangdong 518057 (CN)
(72) Inventor: ZHU, Songlin, Shenzhen, Guangdong 518057 (CN); XIE, Yunpeng, Shenzhen, Guangdong 518057 (CN); YANG, Bo, Shenzhen, Guangdong 518057 (CN)
(74) Representative: Chimini, Francesco
(86) International application number: PCT/CN2023/130821
(87) International publication number: WO 2024/156213

(57) **Abstract**

Embodiments of the present disclosure provide an optical splitter of a passive optical network and an optical signal processing method. The optical splitter comprises a planar lightwave circuit optical splitter and a planar lightwave circuit filter array, wherein the planar lightwave circuit filter array comprises a thin-film filter chip module, the planar lightwave circuit optical splitter is used for splitting an input optical signal into a plurality of sub-signals and inputting the plurality of sub-signals into corresponding thin-film filters, and the thin-film filter chip module is used for filtering the plurality of sub-signals and outputting a plurality of target sub-signals.

## Description

### Cross-Reference to Related Application

The disclosure claims the priority to Chinese Patent Application CN2023100424135 filed on January 28, 2023 and entitled "Optical Splitter of Passive Optical Network and Optical Signal Processing Method", and Chinese Patent Application CN2023109122840 filed on January 28, 2023 and entitled "Optical Splitter of Passive Optical Network and Optical Signal Processing Method", which are incorporated in their entireties herein by reference.

### Technical Field

The disclosure relates to the field of passive optical networks, and particularly relates to an optical splitter and a method for processing optical signals of a passive optical network.

### Background

A Passive Optical Network (PON) is a point-to-multipoint network. A system is mainly composed of an Optical Line Terminal (OLT) at a central office side, an Optical Network Unit (ONU) or an Optical Network Terminal (ONT) at a user side, and an Optical Distribution Network (ODN). The optical distribution network in the passive optical network is used for branching/coupling or multiplexing/demultiplexing optical signals between the optical line terminal and the optical network terminal, and can include optical passive devices such as an optical fiber, an optical splitter, an optical coupler, an optical fiber connector, and a wavelength division multiplexer. This type of multi-branch structure based on optical passive devices such as the optical splitter poses a great challenge to fault detection technologies and topology of optical distribution networks.

In the related art, in order to facilitate optical fiber fault detection and location for the optical distribution networks, an ordinary Planar Lightwave Circuit (PLC) optical splitter is reformed mainly by etching a Bragg grating filter on a branch output waveguide of a PLC optical splitter chip of an ordinary optical splitter or writing an optical fiber Bragg grating on a branch optical fiber of the optical splitter, which is the prevalent solution.

In the method, a Bragg grating filter needs to be etched on a branch output waveguide of a PLC splitter chip of an ordinary splitter, which leads to customization of the PLC splitter chip and increases chip costs. Alternatively, an optical fiber Bragg grating needs to be written on a branch optical fiber of the optical splitter, so that the production process is also changed, and the production cost is greatly increased. Furthermore, the grating written in the two manners is very sensitive to the ambient temperature, and the preset central wavelength of the filter tends to shift with the temperature, thereby affecting the stability of the system. In addition, because characteristics of the grating filter determine characteristics of reflecting a specific wavelength, the ONU/ONT can only identify a port connection relationship of a splitter in an ODN connected to the ONU/ONT in a wavelength encoding manner, but cannot achieve an optical fiber link identification function of an end-to-end Optical Time Domain Reflectometer (OTDR).

In summary, there is still no good solution to the problems in the related art that the production cost of the optical splitter in the passive optical network is high, the preset central wavelengths of filters are prone to drift with temperature, and it is not conducive to accurate fault location of the optical fiber.

### Summary

Embodiments of the disclosure provide an optical splitter and a method for processing optical signals of a passive optical network, so as to at least solve the problems in the related art of high production cost of optical splitters in passive optical networks, easy shift of preset central wavelengths of filters with temperature, and inconvenience of accurate positioning of optical fiber faults .

An embodiment of the disclosure provides an optical splitter of a passive optical network. The optical splitter includes: a planar lightwave circuit optical splitter and a planar lightwave circuit filter array, wherein the planar lightwave circuit filter array is composed of a thin film filter chip module, a plurality of common ports, a plurality of reflection ports, and a plurality of transmission ports, and the thin film filter chip module includes a plurality of thin film filter chips; the planar lightwave circuit optical splitter is used for splitting input optical signals into a plurality of sub-signals according to power and inputting the plurality of sub-signals into the corresponding thin film filter chips in the planar lightwave circuit filter array. Each of the sub-signals is input into one of the thin film filter chips; the thin film filter chip module is used for filtering the plurality of sub-signals and outputting a plurality of target sub-signals; and the common ports, the reflection ports and the transmission ports in the planar lightwave circuit filter array are respectively connected to the thin film filter chips through optical paths formed by lightwave circuit respectively. The thin film filter chips are configured to transmit optical signals having a preset wavelength and reflect optical signals having wavelengths other than the preset wavelength, the target sub-signals include transmission sub-signals and/or reflection sub-signals.

Another embodiment of the disclosure further provides a method for processing optical signals of a passive optical network. The method is applied to the optical splitter of a passive optical network. The method includes: splitting input optical signals into a plurality of sub-signals through a planar lightwave circuit optical splitter according to power; inputting the plurality of sub-signals into a thin film filter chip module in a planar lightwave circuit filter array, wherein each sub-signal is input into one thin film filter chip in the thin film filter chip module; and filtering the plurality of sub-signals through the thin film filter chip module to obtain a plurality of target sub-signals.

Another embodiment of the disclosure further provides a system for processing optical signals of a passive optical network. The system includes: M stages of optical splitters, wherein the M stages of optical splitters include a ith stage optical splitter and (i+1)th stage optical splitters. The ith stage optical splitter and the (i+1)th stage optical splitters are the above-mentioned optical splitter of the passive optical network. Each branch port of the ith stage optical splitter is connected to a common port of one (i+1)th stage optical splitter, wherein M is an integer greater than 1, and i is any integer from 1 to M-1; and in a case where each ith stage optical splitter includes N branch ports, each of the branch ports of the ith stage optical splitter is connected to a common port of N (i+1)th stage optical splitters.

### Brief Description of the Drawings

Fig. 1 is a block diagram of an optical splitter of a passive optical network in an embodiment of the disclosure;
Fig. 2 is a schematic structural diagram of a three-port thin film filter in an embodiment of the disclosure;
Fig. 3 is a transmission and reflection spectrogram of a three-port thin film filter in an embodiment of the disclosure;
Fig. 4 is a schematic structural diagram of a planar lightwave circuit optical splitter in an embodiment of the disclosure;
Fig. 5 is a schematic structural diagram of a planar lightwave circuit filter array in an embodiment of the disclosure;
Fig. 6 is a schematic diagram of series connection between a planar lightwave circuit optical splitter and a planar lightwave circuit filter array in an embodiment of the disclosure;
Fig. 7 is a reflection spectrogram of a single-passband filter of a planar lightwave circuit filter array in an embodiment of the disclosure;
Fig. 8 is a transmission spectrogram of a double-passband filter of a planar lightwave circuit filter array in an embodiment of the disclosure;
Fig. 9 is a schematic diagram of parallel connection between a planar lightwave circuit optical splitter and an arrayed waveguide grating in an embodiment of the disclosure;
Fig. 10 is a schematic diagram of parallel connection between a planar lightwave circuit optical splitter and a multichannel wavelength division multiplexer in an embodiment of the disclosure;
Fig. 11 is a schematic diagram of connection between a planar lightwave circuit optical splitter and an optical fiber array in an embodiment of the disclosure;
Fig. 12 is a schematic diagram of connection between a planar lightwave circuit filter array and an optical fiber array in an embodiment of the disclosure;
Fig. 13 is a schematic diagram of optical fiber connection between a planar lightwave circuit optical splitter and a planar lightwave circuit filter array;
Fig. 14 is a flowchart of a method for processing optical signals of a passive optical network in an embodiment of the disclosure;
Fig. 15 is a block diagram of a system for processing optical signals of a passive optical network in an embodiment of the disclosure;
Fig. 16 is a schematic structural diagram of a system for processing optical signals of a passive optical network in an embodiment of the disclosure;
Fig. 17 is a schematic diagram of wavelength planning of detection optical signals of a two-stage optical splitter in an embodiment of the disclosure;
Fig. 18 is a schematic diagram of an optical splitter of a passive optical network in an embodiment of the disclosure; and
Fig. 19 is a schematic diagram of an optical splitter of a passive optical network based on wavelength division multiplexing in an embodiment of the disclosure.

### Detailed Description of the Embodiments

Embodiments of the disclosure will be described in detail below with reference to the accompanying drawings in conjunction with the embodiments.

It should be noted that the terms such as "first" and "second" in the description and claims of the disclosure and in the drawings are used to distinguish between similar objects and not necessarily to describe a particular order or sequential order.

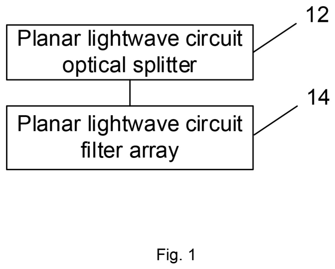

Fig. 1 is a block diagram of an optical splitter of a passive optical network in an embodiment of the disclosure. As shown in Fig. 1, the optical splitter of the passive optical network includes: a planar lightwave circuit optical splitter 12 and a planar lightwave circuit filter array 14.

In some embodiments, the planar lightwave circuit filter array 14 consists of a thin film filter chip module, a plurality of common ports, a plurality of reflection ports, and a plurality of transmission ports. The thin film filter chip module includes a plurality of thin film filter chips.

Further, one common port, one reflection port, one transmission port and one thin film filter chip of the thin film filter chip module in the planar lightwave circuit filter array may constitute one three-port thin film filter.

In some embodiments, the planar lightwave circuit optical splitter 12 is used for splitting input optical signals into a plurality of sub-signals according to power and inputting the plurality of sub-signals into corresponding Thin Film Filters (TFFs) in the planar lightwave circuit filter array. Each of the sub-signals is input into one of the thin film filter chips.

In some embodiments, the thin film filter chip module is used for filtering a plurality of sub-signals and outputting a plurality of target sub-signals. The thin film filter chip module may be designed and processed as a whole, so as to be conducive to large-scale low-cost production and improvement in production efficiency and yield.

In some embodiments, a plurality of pre-processed thin film filter chips may be assembled into the thin film filter chip module, or the thin film filter chip module may be produced as a whole in a filter chip production stage.

In some embodiments of the present disclosure, the planar lightwave circuit optical splitter and the planar lightwave circuit filter array are used for constituting the optical splitter of the passive optical network, such that detection optical signals are filtered by the planar lightwave circuit filter array so as to implement precise positioning of optical fiber faults of a single optical link corresponding to a single detection optical wavelength. In addition, processing difficulty of the optical splitter is reduced. In this way, shift of a preset central wavelength of the filter with temperature is greatly avoided, and reliability of the passive optical network is improved. Thus, problems of high production cost of optical splitters in passive optical networks, easy shift of preset central wavelengths of filters with temperature, and inconvenience of accurate positioning of optical fiber faults in the related art can be solved.

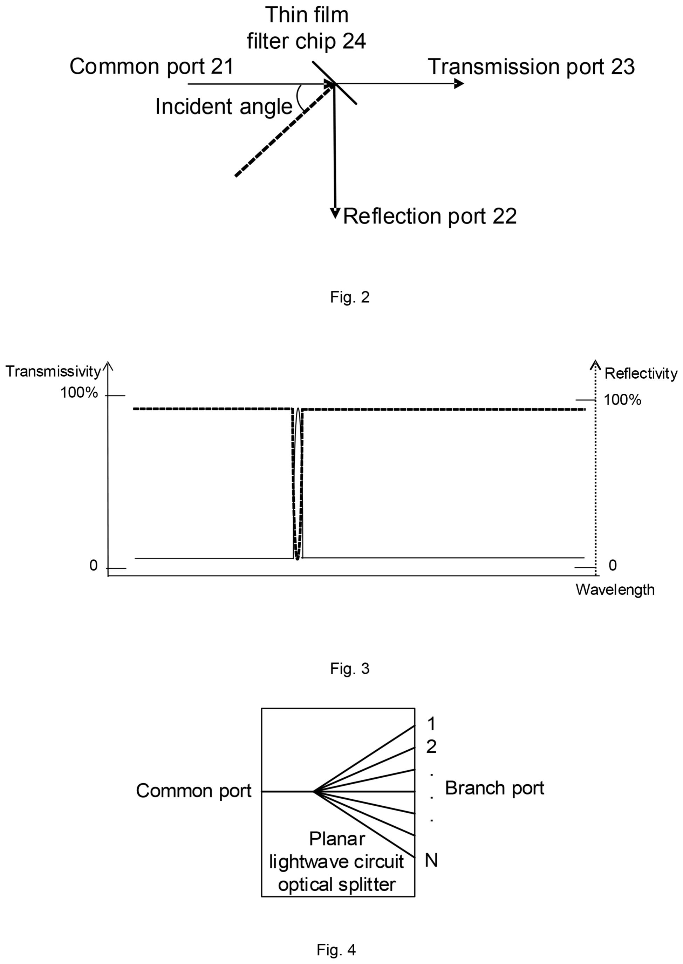

The thin film filter in the embodiment of the present disclosure is a three-port thin film filter. Fig. 2 is a schematic structural diagram of a three-port thin film filter in an embodiment of the disclosure. As shown in Fig. 2, the three-port thin film filter includes the following structures:
a common port 21, a reflection port 22, a transmission port 23, and a thin film filter chip 24.

In some embodiments, the common port 21, the reflection port 22 and the transmission port 23 of the thin film filter are connected to the thin film filter chip 24 through optical paths formed by lightwave circuit respectively. The thin film filter chip 24 is configured to transmit optical signals having a preset wavelength and reflect optical signals having wavelengths other than the preset wavelength. Target sub-signals include transmission sub-signals and/or reflection sub-signals.

In some embodiments, the thin film filter chip 24 is used for filtering the sub-signals input from the common port 21 of the thin film filter, and outputting the transmission sub-signals from the transmission port 23 and/or the reflection sub-signals from the reflection port 22.

In some embodiments, the thin film filter chips may be selected according to filtering requirements. Types of the thin film filter chips include, but are not limited to, single-bandpass filter, double-bandpass filter, and bandstop filter.

Fig. 3 is a transmission and reflection spectrogram of a three-port thin film filter in an embodiment of the disclosure. As shown in Fig. 3, a solid line represents transmissivity data of optical signals having different wavelengths, and a dotted line represents reflectivity data of optical signals having different wavelengths.

In some embodiments, when thin film filter chip 24 is band-pass filter, transmissivity and reflectivity of optical signals having a specified wavelength are close to 100% and 0 respectively, and reflectivity and transmissivity of optical signals having wavelengths other than the specified wavelength are close to 100% and 0 respectively.

Specifically, transmissivity and reflectivity of optical signals may be adjusted to a specific value X% as required, and a value of X is between 0 and 100.

Fig. 4 is a schematic structural diagram of a planar lightwave circuit optical splitter in an embodiment of the disclosure. As shown in Fig. 4, the planar lightwave circuit optical splitter 12 includes: one common port and N branch ports.

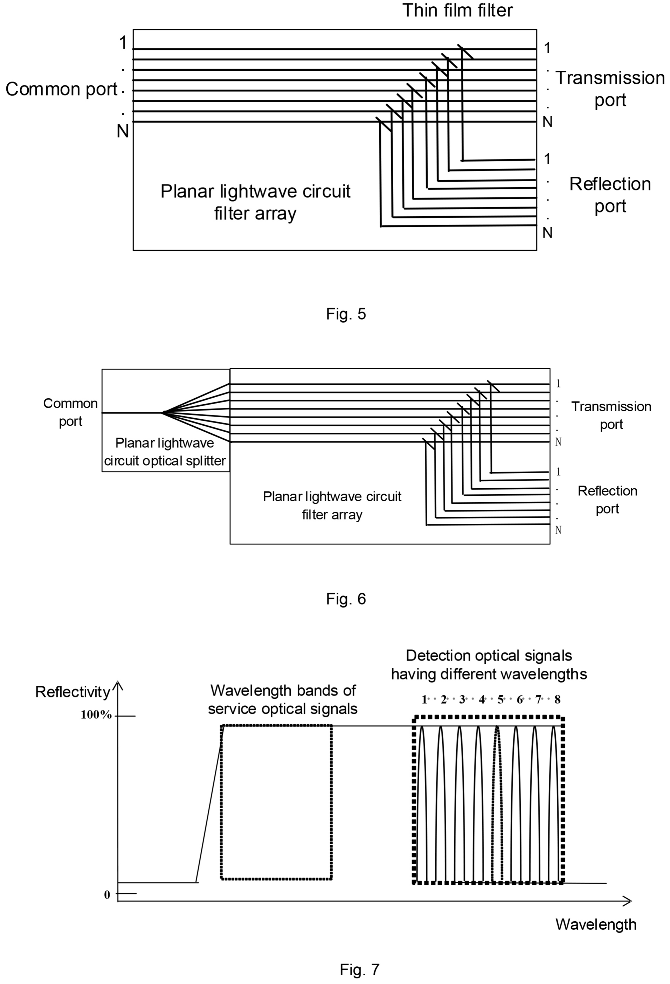

Fig. 5 is a schematic structural diagram of a planar lightwave circuit filter array in an embodiment of the disclosure. As shown in Fig. 5, the planar lightwave circuit filter array 14 includes: N common ports, N reflection ports, N transmission ports, and N thin film filter chips. Each of the thin film filter chips corresponds to one common port, one reflection port, and one transmission port. The N thin film filter chips have different preset transmission wavelengths.

In some embodiments, an incident angle of the filter may be adjusted by designing a waveguide path in the planar lightwave circuit filter array. A planar lightwave circuit filter array module based on a two-port filter may be implemented when the incident angle is zero. The incident angle greater than zero may implement a planar lightwave circuit filter array based on a three-port filter. Meanwhile, an optical path direction may be adjusted by adjusting the incident angle, and a central wavelength of corresponding transmission ports may be fine-tuned.

Further, the incident angle of the designed planar lightwave circuit optical path of the planar lightwave circuit filter array is greater than 0, such that a three-port planar lightwave circuit filter array including a common port, a reflection port and a transmission port may be formed.

In some embodiments, optical signals incident from the common port may be demultiplexed by the three-port thin film filter and then output from the reflection port and the transmission port separately. On the contrary, optical signals having a transmission wavelength and input from the transmission port and optical signals in other bands other than those having the transmission wavelength and input from the reflection port are wavelength-multiplexed through the three-port filter and then output from the common port.

In some embodiments, a planar lightwave circuit may be designed to form optical signal transmission paths of the common port, the transmission port and the reflection port, and corresponding slots formed in the thin film filter. The optical signal transmission paths formed by the planar lightwave circuit may be non-linear and may be designed to be curved according to requirements of device processing. Optical signal transmission paths formed by a plurality of planar lightwave circuits may be designed in an intersected manner without influencing normal transmission of the optical signals. The optical signal transmission paths of three ports may be designed, and a transmission direction may be controlled.

Fig. 6 is a schematic diagram of series connection between a planar lightwave circuit optical splitter and a planar lightwave circuit filter array in an embodiment of the disclosure. As shown in Fig. 6, N branch ports of the planar lightwave circuit optical splitter are connected to N common ports of the planar lightwave circuit filter array in a one-to-one manner.

In some embodiments, the planar lightwave circuit optical splitter is used for splitting one optical signal input from the common port of the planar lightwave circuit optical splitter into N sub-signals according to power and outputting the N sub-signals from the N branch ports of the planar lightwave circuit optical splitter.

In some embodiments, the planar lightwave circuit filter array is used for filtering the N sub-signals input from the N common ports of the planar lightwave circuit filter array through the N thin film filter chips respectively, and outputting N corresponding transmission sub-signals from the N transmission ports and/or N corresponding reflection sub-signals from the N reflection ports.

In some embodiments, the planar lightwave circuit optical splitter is used for splitting one optical signal input from the common port of the planar lightwave circuit optical splitter into N sub-signals according to power and outputting the N sub-signals from the N branch ports of the planar lightwave circuit optical splitter. The optical signal includes service optical signals and detection optical signals. The sub-signals include service sub-signals and detection sub-signals.

Specifically, the service optical signals and the detection optical signals are in different wavelength bands respectively.

In some embodiments, the planar lightwave circuit filter array may only keep the common ports and the transmission ports or only keep the common ports and the reflection ports.

In some embodiments, transmission ports of any single-passband thin film filter in the planar lightwave circuit filter array have different corresponding transmission wavelengths, so reflection ports of any thin film filter have different corresponding blocked transmission wavelengths. The planar lightwave circuit filter array transmits the optical signals in bands other than those having the transmission wavelength from the reflection ports, and the common port may have no strong reflection signal of an incident transmission wavelength signal like a Bragg grating (with excluding a zero incident angle). A transmission filter is used in a embodiment, and the Bragg grating is a reflection grating.

In some embodiments, N thin film filter chips in the planar lightwave circuit filter array may be made into an integral thin film filter chip module. That is, one thin film filter chip module internally includes N thin film filter chips having different filtering wavelengths.

In some embodiments of the disclosure, the planar lightwave circuit filter array is convenient to design and flexible to use, and is independent from components of the optical splitter, so as to be conducive to large-scale low-cost production. Meanwhile, a central wavelength of the thin film filter chips is insensitive to temperature, such that device stability and system reliability are greatly improved.

Fig. 7 is a reflection spectrogram of a single-passband filter of a planar lightwave circuit filter array in an embodiment of the disclosure. As shown in Fig. 7, single-passband thin film filter chips are configured to only transmit detection sub-signals having a preset wavelength and reflect all service sub-signals and other detection sub-signals having wavelengths other than the preset wavelength.

In some embodiments, in a case where N thin film filter chips are N single-passband thin film filter chips, the planar lightwave circuit filter array is used for filtering N sub-signals through the N single-passband thin film filter chips respectively, outputting N corresponding detection sub-signals having a preset wavelength from N transmission ports, and outputting N corresponding service sub-signals and N detection sub-signals having wavelengths other than the preset wavelength from N reflection ports.

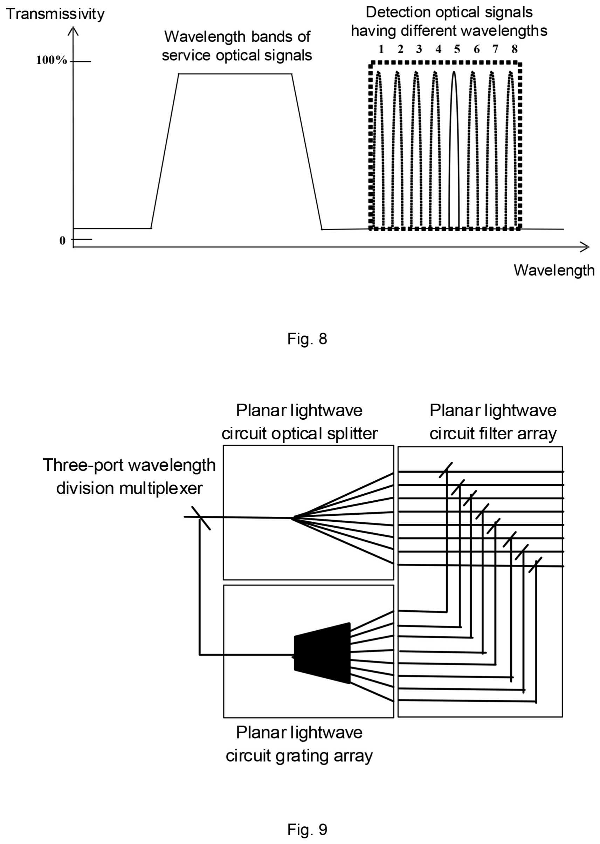

Fig. 8 is a transmission spectrogram of a double-passband filter of a planar lightwave circuit filter array in an embodiment of the disclosure. As shown in Fig. 8, double-passband thin film filter chips are configured to transmit detection sub-signals having a preset wavelength and service optical signals (in two wavelength bands).

In some embodiments, in a case where N thin film filter chips are N double-passband thin film filter chips, the planar lightwave circuit filter array is used for filtering N sub-signals through the N double-passband thin film filter chips respectively, outputting N corresponding detection sub-signals having a preset wavelength and N corresponding service sub-signals from N transmission ports, and outputting N corresponding detection sub-signals having wavelengths other than the preset wavelength from N reflection ports.

In some embodiments, in a downlink direction, the service optical signals and detection optical signals are input from a common port of an optical splitter and are output from N branch ports. Output signals of the N branch ports enter N common ports of a preset planar lightwave circuit filter array correspondingly. In signals input from the common port of a lightwave circuit of a specific thin film filter, the service optical signals in the downlink direction are output from the transmission ports. For optical detection signals having M>N wavelengths, only one preset optical detection signal channel wavelength is output from the transmission port.

In some embodiments, in an uplink direction, the service optical signals are input from the transmission ports of the filter and are output from the common ports. For optical detection signals having M>N wavelengths, only one backscattered signal having a preset detection optical signal channel wavelength is input from the transmission port and output from the common port.

In some embodiments, when there are optical splitters at a same level, strong reflection signals of optical detection signals having a same wavelength of other branches return to original paths, which interfere with backscattered signals of optical detection signals of a main branch. When the incident angle of the filter chips is set to be greater than zero, it is mainly considered to reduce or eliminate backscattered signals of the detection optical signals having the same wavelength of the other branches in the optical splitters at the same level, which are reflected from the original paths and interfere with the optical detection signals of the main branch. This is because the optical detection signals of the other branches having the same wavelength are output from the reflection ports instead of returning from the original paths. A small incident angle is optimal, and less than 8°. Wavelength control is performed while interference in the backscattered signals of the optical detection signals of the main branch of the fact that the reflection signals of the optical detection signals having the same wavelength of the other branches of the optical splitters at the same level return to the original paths is reduced.

In another embodiment, thin film filter chip 24 is further used for filtering and combining sub-signals of a preset reflection wavelength input from the reflection port 22 and sub-signals of a preset transmission wavelength input from the transmission port 23, and outputting combined reflection sub-signals and transmission sub-signals from the common port 21 of the thin film filter.

In some embodiments, the N branch ports of the planar lightwave circuit optical splitter are connected to the N reflection ports or the N transmission ports of the planar lightwave circuit filter array in a one-to-one manner.

In some embodiments, the planar lightwave circuit optical splitter may be used for splitting one optical signal input from the common port of the planar lightwave circuit optical splitter into N sub-signals according to power and outputting the sub-signals from the N branch ports of the planar lightwave circuit optical splitter respectively.

In some embodiments, the planar lightwave circuit filter array is used for filtering the N sub-signals input from the N transmission ports of the planar lightwave circuit filter array through the N thin film filter chips respectively, and outputting N corresponding transmission sub-signals from the N common ports of the planar lightwave circuit filter array. Target sub-signals are the transmission sub-signals.

In some embodiments, the planar lightwave circuit filter array may be used for filtering the N sub-signals input from the N reflection ports of the planar lightwave circuit filter array through the N thin film filter chips respectively, and outputting N corresponding reflection sub-signals from the N common ports of the planar lightwave circuit filter array. Target sub-signals are the reflection sub-signals.

Fig. 9 is a schematic diagram of parallel connection between a planar lightwave circuit optical splitter and an arrayed waveguide grating in an embodiment of the disclosure. As shown in Fig. 9, the optical splitter further includes a three-port wavelength division multiplexer and the arrayed waveguide grating (a planar lightwave circuit array grating).

In some embodiments, the arrayed waveguide grating includes one common port and N branch ports. The three-port wavelength division multiplexer includes one common port and two output ports.

Further, the three-port wavelength division multiplexer is used for splitting optical signals input from the common port of the three-port wavelength division multiplexer into service optical signals and detection optical signals, outputting the service optical signals and the detection optical signals from the two output ports of the three-port wavelength division multiplexer respectively, inputting the service optical signals into the common port of the planar lightwave circuit optical splitter, and inputting the detection optical signals into a common port of the arrayed waveguide grating or a multichannel wavelength division multiplexer.

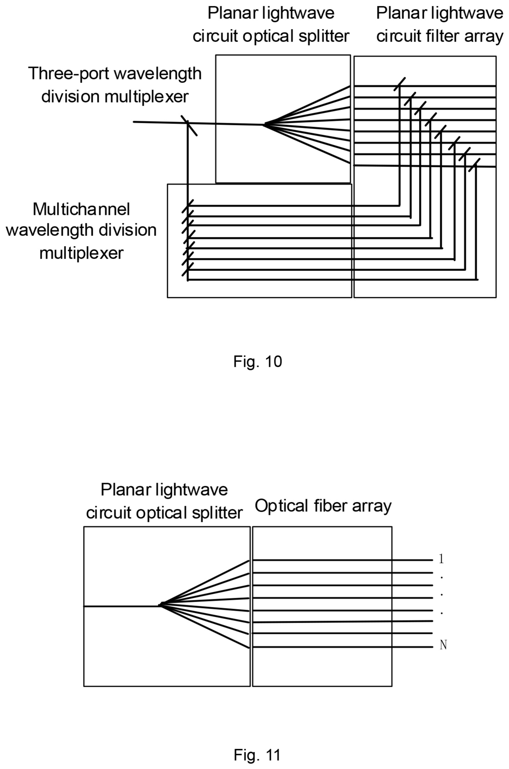

Fig. 10 is a schematic diagram of parallel connection between a planar lightwave circuit optical splitter and a multichannel wavelength division multiplexer in an embodiment of the disclosure. As shown in Fig. 10, the optical splitter further includes a three-port wavelength division multiplexer and a multichannel wavelength division multiplexer.

In some embodiments, the multichannel wavelength division multiplexer includes one common port and N branch ports.

In some embodiments, the three-port wavelength division multiplexer includes one common port and two output ports. The three-port wavelength division multiplexer is used for splitting optical signals input from the common port of the three-port wavelength division multiplexer into service optical signals and detection optical signals, outputting the service optical signals and the detection optical signals from the two output ports of the three-port wavelength division multiplexer respectively, inputting the service optical signals into a common port of the planar lightwave circuit optical splitter, and inputting the detection optical signal into a common port of an arrayed waveguide grating or the multichannel wavelength division multiplexer.

In some embodiments, the planar lightwave circuit optical splitter is used for splitting the service optical signals into N service sub-signals according to power.

In some embodiments, the arrayed waveguide grating or the multichannel wavelength division multiplexer is used for splitting the detection optical signals into N detection sub-signals according to wavelengths.

In some embodiments, the planar lightwave circuit filter array is used for receiving the N service sub-signals from N transmission ports and receiving the N detection sub-signals from N reflection ports, or is used for receiving the N service sub-signals from N reflection ports and receiving the N detection sub-signals from N transmission ports.

In some embodiments, the planar lightwave circuit filter array is further used for combining the N service sub-signals and the N detection sub-signals into N target sub-signals through N thin film filter chips, and outputting the N target sub-signals from N common ports of the planar lightwave circuit filter array. The target sub-signals include the detection sub-signals and the service sub-signals.

In some embodiments, the N branch ports of the arrayed waveguide grating or the multichannel wavelength division multiplexer may be connected to the N transmission ports of the planar lightwave circuit filter array respectively. The N branch ports of the planar lightwave circuit optical splitter are connected to the N reflection ports of the planar lightwave circuit filter array respectively. The planar lightwave circuit filter array is used for receiving the N detection sub-signals from the N branch ports of the arrayed waveguide grating or the multichannel wavelength division multiplexer from the N transmission ports, and receiving the N service sub-signals from the N branch ports of the planar lightwave circuit optical splitter from the N reflection ports.

In some embodiments, the N branch ports of the arrayed waveguide grating or the multichannel wavelength division multiplexer may be connected to the N reflection ports of the planar lightwave circuit filter array respectively. The N branch ports of the planar lightwave circuit optical splitter are connected to the N transmission ports of the planar lightwave circuit filter array respectively. The planar lightwave circuit filter array is used for receiving the N detection sub-signals from the N branch ports of the arrayed waveguide grating or the multichannel wavelength division multiplexer from the N reflection ports, and receiving the N service sub-signals from the N branch ports of the planar lightwave circuit optical splitter from the N transmission ports.

In another embodiment, the optical splitter further includes: one or more optical fiber arrays.

In some embodiments, the optical fiber arrays are used for being connected to the planar lightwave circuit optical splitter and/or the planar lightwave circuit filter array. The optical fiber arrays include N branch ports and N branch optical fibers. Each of the branch ports of the optical fiber arrays is connected to a corresponding branch optical fiber through an optical path formed by lightwave circuit.

Fig. 11 is a schematic diagram of connection between a planar lightwave circuit optical splitter and an optical fiber array in an embodiment of the disclosure. As shown in Fig. 11, N branch ports of the planar lightwave circuit optical splitter are connected to N branch ports of the optical fiber array in a one-to-one manner.

In some embodiments, the N branch ports of the planar lightwave circuit optical splitter and the N branch ports of the optical fiber array are all lightwave circuit ports. The lightwave circuit ports may be directly connected to each other.

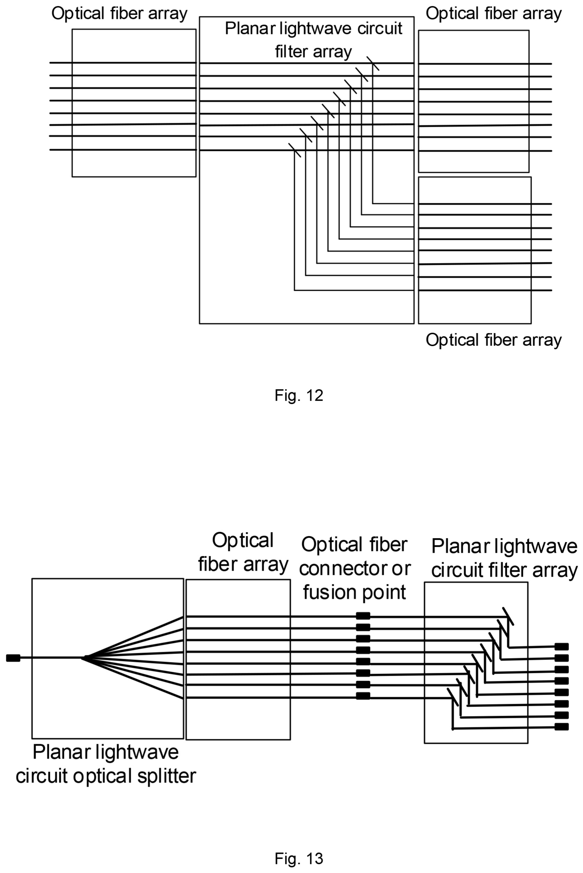

Fig. 12 is a schematic diagram of connection between a planar lightwave circuit filter array and an optical fiber array in an embodiment of the disclosure. As shown in Fig. 12, lightwave circuit ports (common ports, transmission ports, or reflection ports) of the planar lightwave circuit filter array are connected to lightwave circuit ports (branch ports) of the optical fiber array in a one-to-one manner.

Fig. 13 is a schematic diagram of optical fiber connection between a planar lightwave circuit optical splitter and a planar lightwave circuit filter array. As shown in Fig. 13, ports of the planar lightwave circuit optical splitter and the planar lightwave circuit filter array are optical fibers.

In some embodiments, the optical fibers may be connected through optical fiber connectors or hot melting (welding).

In some embodiments, the planar lightwave circuit optical splitter and the planar lightwave circuit filter array may be connected to an optical fiber array, so as to convert branch ports into branch optical fibers.

In some embodiments, planar lightwave circuit ports may be converted into optical fiber connection ports through the optical fiber array, such that application ranges of the planar lightwave circuit optical splitter and the planar lightwave circuit filter array are expanded, and especially original passive optical network devices only having optical fiber ports may be upgraded.

Another embodiment of the disclosure further provides a method for processing optical signals of a passive optical network. The method is applied to the optical splitter of a passive optical network in any one of the embodiments.

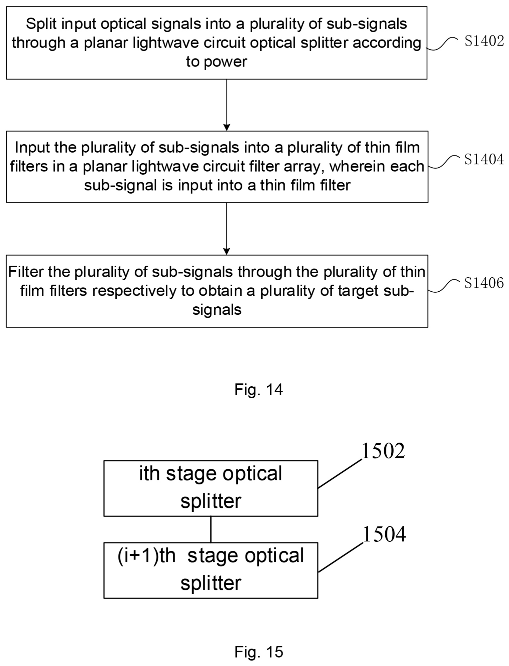

Fig. 14 is a flowchart of a method for processing optical signals of a passive optical network in an embodiment of the disclosure. As shown in Fig. 14, the method for processing optical signals includes the following steps:
S1402, input optical signals are split into a plurality of sub-signals through a planar lightwave circuit optical splitter according to power.
S1404, the plurality of sub-signals are input into a plurality of thin film filters in a planar lightwave circuit filter array. Each of the sub-signals is input into one of the thin film filters.
S1406, the plurality of sub-signals are filtered through the plurality of thin film filters respectively to obtain a plurality of target sub-signals.

In some embodiments, S1402 may specifically include the following steps: the optical signals are received through a common port of the planar lightwave circuit optical splitter; the optical signals are split into N sub-signals through the planar lightwave circuit optical splitter according to power; and the N sub-signals are output from N branch ports of the planar lightwave circuit optical splitter respectively. Each of the branch ports of the planar lightwave circuit optical splitter outputs one sub-signal.

In some embodiments, S1406 may specifically include the following steps: the N sub-signals are received through N common ports of the planar lightwave circuit filter array, where the planar lightwave circuit filter array includes N thin film filters, and each of the thin film filters includes one thin film filter chip, one common port, one reflection port, and one transmission port; the N sub-signals are filtered through N thin film filter chips of the planar lightwave circuit filter array, and N transmission sub-signals and N reflection sub-signals are obtained; corresponding transmission sub-signals are output through N transmission ports of the planar lightwave circuit filter array respectively; and/or, corresponding reflection sub-signals are output through N reflection ports of the planar lightwave circuit filter array respectively. The target sub-signals include the reflection sub-signals and/or the transmission sub-signals.

In some embodiments, the optical signals include service optical signals and detection optical signals. The sub-signals include service sub-signals and detection sub-signals.

Further, the N sub-signals are filtered through the N thin film filter chips of the planar lightwave circuit filter array respectively to obtain N transmission sub-signals and N reflection sub-signals.

In a case where the thin film filter chips are single-passband thin film filter chips, the N sub-signals are filtered through N single-passband thin film filter chips respectively, and the N transmission sub-signals and the N reflection sub-signals are obtained. The transmission sub-signals include detection sub-signals having a preset wavelength. The reflection sub-signals include the service sub-signals and detection sub-signals having wavelengths other than the preset wavelength.

In a case where the thin film filter chips are double-passband thin film filter chips, the N sub-signals are filtered through N double-passband thin film filter chips respectively, and the N transmission sub-signals and the N reflection sub-signals are obtained. The transmission sub-signals include the service sub-signals and detection sub-signals having the preset wavelength. The reflection sub-signals include detection sub-signals having wavelengths other than the preset wavelength.

In some embodiments, S1406 may specifically include the following steps: the N sub-signals are received through N transmission ports and/or N reflection ports of the planar lightwave circuit filter array, where the planar lightwave circuit filter array includes N thin film filters, and each of the thin film filters corresponds to one thin film filter chip, one common port, one reflection port, and one transmission port; the N sub-signals are filtered through N thin film filter chips of the planar lightwave circuit filter array, and N transmission sub-signals and/or N reflection sub-signals are obtained; and corresponding transmission sub-signals and/or reflection sub-signals are output through N common ports of the planar lightwave circuit filter array respectively. The target sub-signals include the reflection sub-signals or the transmission sub-signals.

In some embodiments, before S1402, the method for processing optical signals of a passive optical network may further include the following steps: the optical signals are split into service optical signals and detection optical signals through a three-port wavelength division multiplexer; the service optical signals are input into the common port of the planar lightwave circuit optical splitter, where the planar lightwave circuit optical splitter is used for splitting the service optical signals into N service sub-signals according to power; and the detection optical signals are input into a common port of an arrayed waveguide grating or a multichannel wavelength division multiplexer. The arrayed waveguide grating or the multichannel wavelength division multiplexer is used for splitting the detection optical signals into N detection sub-signals according to wavelengths.

In some embodiments, S1404 may specifically include the following steps: the N service sub-signals output from the N branch ports of the planar lightwave circuit optical splitter are input into the planar lightwave circuit filter array, where each of the service sub-signals is input into one of the thin film filters; and the N detection sub-signals output from N branch ports of the arrayed waveguide grating or the multichannel wavelength division multiplexer are input into the planar lightwave circuit filter array. Each of the detection sub-signals is input into one of the thin film filters.

In some embodiments, S1406 may specifically include the following steps: the N service sub-signals are received through the N transmission ports of the planar lightwave circuit filter array, and the N detection sub-signals are received through the N reflection ports of the planar lightwave circuit filter array; or, the N service sub-signals are received through the N reflection ports of the planar lightwave circuit filter array, and the N detection sub-signals are received through the N transmission ports of the planar lightwave circuit filter array; the N service sub-signals and the N detection sub-signals are combined into N target sub-signals through the N thin film filter chips of the planar lightwave circuit filter array, where each of the target sub-signals includes one detection sub-signal and one service sub-signal; and the N target sub-signals are output through the N common ports of the planar lightwave circuit filter array.

Another embodiment of the disclosure further provides a system for processing optical signals of a passive optical network. The system for processing optical signals of a passive optical network is composed of a plurality of optical splitters of a passive optical network in the above embodiments.

Fig. 15 is a block diagram of a system for processing optical signals of a passive optical network in an embodiment of the disclosure. As shown in Fig. 15, the system includes ith stage optical splitter(s) 1502 and (i+1)th stage optical splitter(s) 1504.

In some embodiments, the system includes M stages of optical splitters. The M stages of optical splitters at least include the ith stage optical splitter(s) and the (i+1)th stage optical splitter(s). The ith stage optical splitter and the (i+1)th stage optical splitter are the optical splitter of a passive optical network according to the above embodiments. Each branch port of the ith stage optical splitter is connected to a common port of one (i+1)th stage optical splitter. M is an integer greater than 1, and i is any integer from 1 to M-1.

Specifically, M is a total number of stages of optical splitters. For instance, two-stage optical splitter includes a first stage optical splitter and second stage optical splitters, three-stage optical splitter includes a first stage optical splitter, second stage optical splitters and third-level optical splitters, and so on.

Further, in a case where each ith stage optical splitter includes N branch ports, each of the branch ports of the ith stage optical splitter is connected to a common port of N (i+1)th stage optical splitters.

In some embodiments, the ith stage optical splitter is used for splitting the optical signals into N target signals having different wavelength ranges. N thin film filter chips in the ith stage optical splitter have different preset transmission wavelength ranges, or the ith stage optical splitter includes a multichannel wavelength division multiplexer.

In some embodiments, the N (i+1)th stage optical splitters are used for splitting the target signals into a plurality of target sub-signals having different wavelengths. A plurality of thin film filter chips in each of the (i+1)th stage optical splitters have different preset transmission wavelengths, or each of the (i+1)th stage optical splitters includes an arrayed waveguide grating (a planar lightwave circuit array grating).

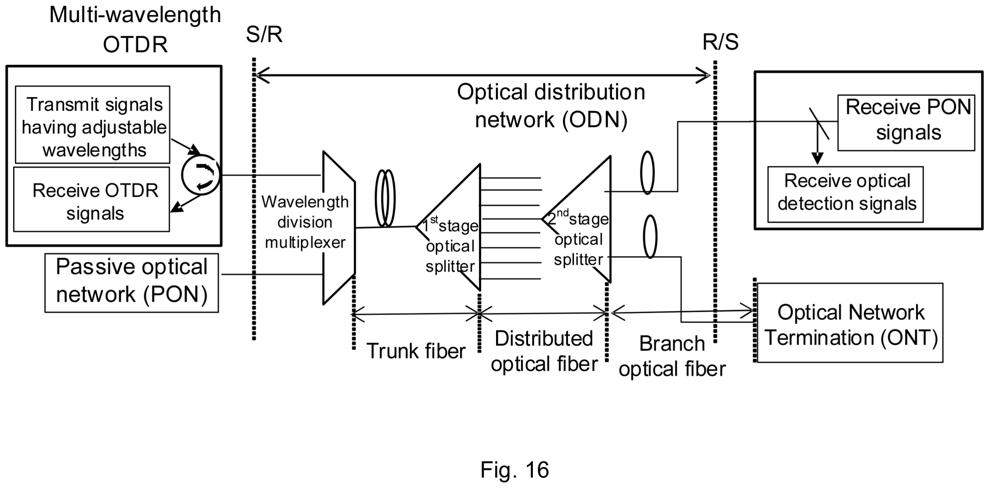

Fig. 16 is a schematic structural diagram of a system for processing optical signals of a passive optical network in an embodiment of the disclosure. As shown in Fig. 16, the system includes a first stage optical splitter and a second stage optical splitter.

In some embodiments, optical fibers between a wavelength division multiplexer (three-port wavelength division multiplexer) and a first stage optical splitter are trunk fibers. Optical fibers between the first stage optical splitter and second stage optical splitters are distributed optical fibers. Optical fibers between the second stage optical splitters and optical network terminals are branch optical fibers.

In some embodiments, a multi-wavelength Optical Time-Domain Reflectometer (OTDR) detection device is located at an Optical Line Terminal (OLT) side, and is used for emitting detection light having an adjustable specific wavelength and transmitting the detection light to a wavelength division multiplexer (coexistence, CEx); and receiving echo signals having a same wavelength as the detection light and analyzing OTDR signals. The wavelength division multiplexer (CEx) is located at the OLT side, and is used for multiplexing a detection optical signal wavelength with a downlink working wavelength so as to enter a trunk fiber of an Optical Distribution Network (ODN).

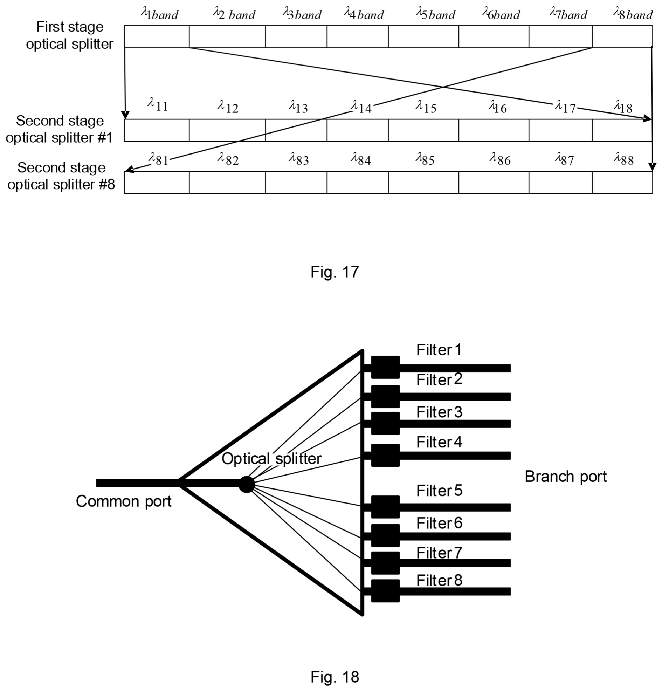

Fig. 17 is a schematic diagram of wavelength planning of detection optical signals of a two-stage optical splitter in an embodiment of the disclosure. As shown in Fig. 17, the system for processing optical signals of a passive optical network consists of two-stage optical splitter including one first stage optical splitter and eight second stage optical splitters.

In some embodiments, each branch output band of the first stage optical splitter is bound to a specific branch port. The first stage optical splitter has eight branch ports from number 1 to number 8, and wavelength bands are λ1band to λ8band.

In some embodiments, wavelength of the second stage optical splitter is a periodic subdivision of each branch output waveband of the first stage optical splitter. The wavelength of the second stage optical splitter is bound to a specific branch port. Number 1 branch port of the first stage optical splitter is connected to number 1 second stage optical splitter. Number 8 branch port of the first stage optical splitter is connected to number 8 second stage optical splitter.

Specifically, the number 1 second stage optical splitter has eight branch ports having wavelengths of λ11 to λ18 respectively. The number 8 second stage optical splitter has eight branch ports having wavelengths of λ81 to λ88 respectively, and wavelength division for optical splitters with other numbers is performed in a similar way.

Further, wavelengths λ11 to λ18 are periodic subdivisions of the wavelength band λ1band, and wavelengths λ81 to λ88 are periodic subdivisions of the wavelength band λ8band. A corresponding relationship between optical detection wavelength numbers and optical splitter port numbers may be determined through a schematic diagram of wavelength planning of detection optical signals of two-stage optical splitter in Fig. 17.

According to the embodiment of the disclosure, a single wavelength corresponds to a single optical fiber link, such that end-to-end detection of optical detection signals may be implemented. That is, backscattered signals may detect optical links in an end-to-end manner. Meanwhile, an optical splitter port identification function of ONU/ONT connection may be achieved, and further optical fiber faults may be accurately located. The wavelength planning in the embodiment of the disclosure may be adjusted for application scenes and filter types.

Fig. 18 is a schematic diagram of an optical splitter of a passive optical network in an embodiment of the disclosure. As shown in Fig. 18, the optical splitter is a structure in which a planar lightwave circuit optical splitter and a planar lightwave circuit filter array are connected in series.

In some embodiments, the structure is equivalent to adding a filter to each branch of a common optical splitter. The filters of all the branches of the optical splitter have different transmission wavelengths. The structure may be used in the first stage optical splitter.

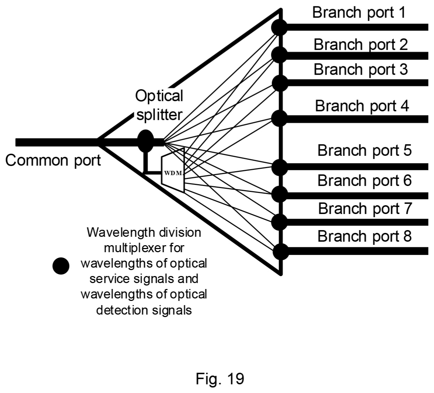

Fig. 19 is a schematic diagram of an optical splitter of a passive optical network based on wavelength division multiplexing in an embodiment of the disclosure. As shown in Fig. 19, the optical splitter has a structure in which a planar lightwave circuit optical splitter and a wavelength division multiplexer are connected in parallel.

In some embodiments, optical signals may be split into service optical signals and detection optical signals through Wavelength Division Multiplexing (WDM), the service optical signals may be split into service sub-signals through the planar lightwave circuit optical splitter, the detection optical signals may be split into detection sub-signals through a multichannel wavelength division multiplexer, and then the service sub-signals and the detection sub-signals may be combined into target sub-signals through the wavelength division multiplexer or a three-port filter. The structure may be used in a second stage optical splitter.

Further, the multichannel wavelength division multiplexer may be replaced by a planar lightwave circuit array grating. However, in the system, composed of a plurality of stages of optical splitters, for processing optical signals of a passive optical network, a first stage optical splitter is generally composed of the multichannel wavelength division multiplexer, and a second stage optical splitter is generally composed of the planar lightwave circuit array grating.

The specific examples in this embodiment can refer to the examples described in the above embodiments and exemplary implementation methods. Therefore, this embodiment does not need to be elaborated further.

Obviously, those skilled in the art should understand that the above modules or steps of the disclosure can be achieved by a general-purpose computing device, can be centralized on a single computing device or distributed on a network composed of a plurality of computing devices, or can be achieved by program codes executable by the computing device, such that they can be stored in a storage device so as to be executed by the computing device. Under some conditions, the steps shown or described can be executed in an order different from that herein, or they can be fabricated separately as individual integrated circuit modules, or a plurality of modules or steps of them can be fabricated as a single integrated circuit module for achievement. Thus, the disclosure is not limited to any combination of particular hardware and software.

What are described above are merely preferred embodiments of the disclosure and are not intended to limit the disclosure, and various changes and modifications can be made to the disclosure by those skilled in the art. Any modifications, equivalent substitutions, improvements, etc. within principles of the disclosure are intended to fall within the scope of protection of the disclosure.

## Claims

1. An optical splitter of a passive optical network, comprising:
a planar lightwave circuit optical splitter and a planar lightwave circuit filter array, wherein the planar lightwave circuit filter array is composed of a thin film filter chip module, a plurality of common ports, a plurality of reflection ports, and a plurality of transmission ports, and the thin film filter chip module comprises a plurality of thin film filter chips;
the planar lightwave circuit optical splitter is used for splitting input optical signals into a plurality of sub-signals according to power and inputting the plurality of sub-signals into the corresponding thin film filter chips in the planar lightwave circuit filter array, and each of the sub-signals is input into one of the thin film filter chips;
the thin film filter chip module is used for filtering the plurality of sub-signals and outputting a plurality of target sub-signals; and
the common ports, the reflection ports and the transmission ports in the planar lightwave circuit filter array are respectively connected to the thin film filter chips through optical paths formed by lightwave circuits respectively, the thin film filter chips are configured to transmit optical signals having a preset wavelength and reflect optical signals having wavelengths other than the preset wavelength, and the target sub-signals comprise transmission sub-signals and/or reflection sub-signals.

2. The optical splitter according to claim 1, wherein
the thin film filter chips are used for filtering the sub-signals input from the common ports of the planar lightwave circuit filter array, and outputting the transmission sub-signals from the transmission ports and/or the reflection sub-signals from the reflection ports.

3. The optical splitter according to claim 2, wherein
the planar lightwave circuit optical splitter comprises: one common port and N branch ports;
the planar lightwave circuit filter array comprises: N common ports, N reflection ports, and N transmission ports, the thin film filter chip module comprises N thin film filter chips, each of the thin film filter chips corresponds to one common port, one reflection port, and one transmission port, and the N thin film filter chips have different preset transmission wavelengths;
the N branch ports of the planar lightwave circuit optical splitter are connected to the N common ports of the planar lightwave circuit filter array in a one-to-one manner;
the planar lightwave circuit optical splitter is used for splitting one optical signal input from the common port of the planar lightwave circuit optical splitter into N sub-signals according to power and outputting the N sub-signals from the N branch ports of the planar lightwave circuit optical splitter; and
the planar lightwave circuit filter array is used for filtering the N sub-signals input from the N common ports of the planar lightwave circuit filter array through the N thin film filter chips respectively, and outputting N corresponding transmission sub-signals from the N transmission ports and/or N corresponding reflection sub-signals from the N reflection ports.

4. The optical splitter according to claim 3, wherein
the planar lightwave circuit optical splitter is used for splitting one optical signal input from the common port of the planar lightwave circuit optical splitter into N sub-signals according to power and outputting the N sub-signals from the N branch ports of the planar lightwave circuit optical splitter, the optical signal comprises service optical signals and detection optical signals, and the sub-signals comprise service sub-signals and detection sub-signals;
in a case where the N thin film filter chips are N single-passband thin film filter chips, the planar lightwave circuit filter array is used for filtering the N sub-signals through the N single-passband thin film filter chips respectively, outputting N corresponding detection sub-signals having the preset wavelength from the N transmission ports, and outputting N corresponding service sub-signals and N detection sub-signals having wavelengths other than the preset wavelength from the N reflection ports; and
in a case where the N thin film filter chips are N double-passband thin film filter chips, the planar lightwave circuit filter array is used for filtering the N sub-signals through the N double-passband thin film filter chips respectively, outputting N corresponding detection sub-signals having the preset wavelength and N corresponding service sub-signals from the N transmission ports, and outputting N corresponding detection sub-signals having wavelengths other than the preset wavelength from the N reflection ports.

5. The optical splitter according to claim 1, wherein
the thin film filter chips are used for filtering and combining sub-signals of a preset reflection wavelength input from the reflection ports and sub-signals of a preset transmission wavelength input from the transmission ports, and outputting combined reflection sub-signals and transmission sub-signals from the common ports of the planar lightwave circuit filter array.

6. The optical splitter according to claim 5, wherein
the planar lightwave circuit optical splitter comprises: one common port and N branch ports;
the planar lightwave circuit filter array comprises: N common ports, N reflection ports, and N transmission ports, the thin film filter chip module comprises N thin film filter chips, each of the thin film filter chips corresponds to one common port, one reflection port, and one transmission port, and the N thin film filter chips have different preset transmission wavelengths;
the N branch ports of the planar lightwave circuit optical splitter are connected to the N reflection ports or the N transmission ports of the planar lightwave circuit filter array in a one-to-one manner;
the planar lightwave circuit optical splitter is used for splitting one optical signal input from the common port of the planar lightwave circuit optical splitter into N sub-signals according to power and outputting the sub-signals from the N branch ports of the planar lightwave circuit optical splitter respectively;
the planar lightwave circuit filter array is used for filtering the N sub-signals input from the N transmission ports of the planar lightwave circuit filter array through the N thin film filter chips respectively, and outputting N corresponding transmission sub-signals from the N common ports of the planar lightwave circuit filter array, wherein the target sub-signals are the transmission sub-signals;
or, the planar lightwave circuit filter array is used for filtering the N sub-signals input from the N reflection ports of the planar lightwave circuit filter array through the N thin film filter chips respectively, and outputting N corresponding reflection sub-signals from the N common ports of the planar lightwave circuit filter array, wherein the target sub-signals are the reflection sub-signals.

7. The optical splitter according to claim 6,
further comprising a three-port wavelength division multiplexer and an arrayed waveguide grating or a multichannel wavelength division multiplexer, wherein the arrayed waveguide grating or the multichannel wavelength division multiplexer comprises one common port and N branch ports;
the three-port wavelength division multiplexer comprises one common port and two output ports;
the three-port wavelength division multiplexer is used for splitting optical signals input from the common port of the three-port wavelength division multiplexer into service optical signals and detection optical signals, outputting the service optical signals and the detection optical signals from the two output ports of the three-port wavelength division multiplexer respectively, inputting the service optical signals into the common port of the planar lightwave circuit optical splitter, and inputting the detection optical signals into the common port of the arrayed waveguide grating or the multichannel wavelength division multiplexer;
the planar lightwave circuit optical splitter is used for splitting the service optical signals into N service sub-signals according to power;
the arrayed waveguide grating or the multichannel wavelength division multiplexer is used for splitting the detection optical signals into N detection sub-signals according to wavelengths;
the planar lightwave circuit filter array is used for receiving the N service sub-signals from the N transmission ports and receiving the N detection sub-signals from the N reflection ports, or is used for receiving the N service sub-signals from the N reflection ports and receiving the N detection sub-signals from the N transmission ports; and
the planar lightwave circuit filter array is further used for combining the N service sub-signals and the N detection sub-signals into N target sub-signals through the N thin film filter chips, and outputting the N target sub-signals from the N common ports of the planar lightwave circuit filter array, and the target sub-signals comprise the detection sub-signals and the service sub-signals.

8. The optical splitter according to claim 7, wherein
the N branch ports of the arrayed waveguide grating or the multichannel wavelength division multiplexer are connected to the N transmission ports of the planar lightwave circuit filter array respectively;
the N branch ports of the planar lightwave circuit optical splitter are connected to the N reflection ports of the planar lightwave circuit filter array respectively; and
the planar lightwave circuit filter array is used for receiving the N detection sub-signals from the N branch ports of the arrayed waveguide grating or the multichannel wavelength division multiplexer from the N transmission ports, and receiving the N service sub-signals from the N branch ports of the planar lightwave circuit optical splitter from the N reflection ports.

9. The optical splitter according to claim 7, wherein
the N branch ports of the arrayed waveguide grating or the multichannel wavelength division multiplexer are connected to the N reflection ports of the planar lightwave circuit filter array respectively;
the N branch ports of the planar lightwave circuit optical splitter are connected to the N transmission ports of the planar lightwave circuit filter array respectively; and
the planar lightwave circuit filter array is used for receiving the N detection sub-signals from the N branch ports of the arrayed waveguide grating or the multichannel wavelength division multiplexer from the N reflection ports, and receiving the N service sub-signals from the N branch ports of the planar lightwave circuit optical splitter from the N transmission ports.

10. The optical splitter according to any one of claims 1 to 9, further comprising:
one or more optical fiber arrays, wherein
the optical fiber arrays are used for being connected to the planar lightwave circuit optical splitter and/or the planar lightwave circuit filter array, the optical fiber arrays comprise N branch ports and N branch optical fibers, and each of the branch ports of the optical fiber arrays is connected to a corresponding branch optical fiber through an optical path formed by lightwave circuit.

11. A method for processing optical signals of a passive optical network, applied to an optical splitter of a passive optical network according to any one of claims 1 to 10, the method comprising:
splitting input optical signals into a plurality of sub-signals through a planar lightwave circuit optical splitter according to power;
inputting the plurality of sub-signals into a thin film filter chip module in a planar lightwave circuit filter array, wherein each of the sub-signals is input into one thin film filter chip in the thin film filter chip module; and
filtering the plurality of sub-signals through the thin film filter chip module to obtain a plurality of target sub-signals.

12. The method according to claim 11, wherein the splitting output optical signals into a plurality of sub-signals through a planar lightwave circuit optical splitter according to power comprises:
receiving the optical signals through a common port of the planar lightwave circuit optical splitter;
splitting the optical signals into N sub-signals through the planar lightwave circuit optical splitter according to power; and
outputting the N sub-signals from N branch ports of the planar lightwave circuit optical splitter respectively, wherein each of the branch ports of the planar lightwave circuit optical splitter outputs one sub-signal.

13. The method according to claim 12, wherein the filtering the plurality of sub-signals through the thin film filter chip module to obtain a plurality of target sub-signals comprises:
receiving the N sub-signals through N common ports of the planar lightwave circuit filter array, wherein the thin film filter chip module of the planar lightwave circuit filter array comprises N thin film filter chips, and each of the thin film filter chips corresponds to one common port, one reflection port, and one transmission port;
filtering the N sub-signals through the N thin film filter chips to obtain N transmission sub-signals and N reflection sub-signals; and
outputting corresponding transmission sub-signals through N transmission ports of the planar lightwave circuit filter array respectively; and/or, outputting corresponding reflection sub-signals through N reflection ports of the planar lightwave circuit filter array respectively, wherein the target sub-signals comprise the reflection sub-signals and/or the transmission sub-signals.

14. The method according to claim 13, wherein the filtering the N sub-signals through the N thin film filter chips to obtain N transmission sub-signals and N reflection sub-signals comprises:
the optical signals comprise service optical signals and detection optical signals, and the sub-signals to comprise service sub-signals and detection sub-signals;
filtering, in a case where the thin film filter chips are single-passband thin film filter chips, the N sub-signals through the N single-passband thin film filter chips respectively, to obtain the N transmission sub-signals and the N reflection sub-signals, wherein the transmission sub-signals comprise detection sub-signals having a preset wavelength, and the reflection sub-signals comprise the service sub-signals and detection sub-signals having wavelengths other than the preset wavelength; and
filtering, in a case where the thin film filter chips are double-passband thin film filter chips, the N sub-signals through the N double-passband thin film filter chips respectively, to obtain the N transmission sub-signals and the N reflection sub-signals, wherein the transmission sub-signals comprise the service sub-signals and detection sub-signals having the preset wavelength, and the reflection sub-signals comprise detection sub-signals having wavelengths other than the preset wavelength.

15. The method according to claim 12, wherein the filtering the plurality of sub-signals through the thin film filter chip module to obtain a plurality of target sub-signals comprises:
receiving N sub-signals through N transmission ports and/or N reflection ports of the planar lightwave circuit filter array, wherein the thin film filter chip module of the planar lightwave circuit filter array comprises N thin film filter chips, and each of the thin film filter chips corresponds to one common port, one reflection port, and one transmission port;
filtering the N sub-signals through the N thin film filter chips of the thin film filter chip module, to obtain N transmission sub-signals and/or N reflection sub-signals; and
outputting corresponding transmission sub-signals and/or reflection sub-signals through N common ports of the planar lightwave circuit filter array respectively, wherein the target sub-signals comprise the reflection sub-signals or the transmission sub-signals.

16. The method according to claim 15, further comprising:
splitting the optical signals into service optical signals and detection optical signals through a three-port wavelength division multiplexer;
inputting the service optical signals into the common port of the planar lightwave circuit optical splitter, wherein the planar lightwave circuit optical splitter is used for splitting the service optical signals into N service sub-signals according to power; and
inputting the detection optical signals into a common port of an arrayed waveguide grating or a multichannel wavelength division multiplexer, wherein the arrayed waveguide grating or the multichannel wavelength division multiplexer is used for splitting the detection optical signals into N detection sub-signals according to wavelengths.

17. The method according to claim 16, wherein the inputting the plurality of sub-signals into a thin film filter chip module in a planar lightwave circuit filter array comprises:
inputting the N service sub-signals output from the N branch ports of the planar lightwave circuit optical splitter into the planar lightwave circuit filter array, wherein each of the service sub-signals is input into one of the thin film filter chips; and
inputting the N detection sub-signals output from N branch ports of the arrayed waveguide grating or the multichannel wavelength division multiplexer into the planar lightwave circuit filter array, wherein each of the detection sub-signals is input into one of the thin film filter chips.

18. The method according to claim 17, wherein the filtering the plurality of sub-signals through the thin film filter chip module to obtain a plurality of target sub-signals comprises:
receiving the N service sub-signals through the N transmission ports of the planar lightwave circuit filter array, and receiving the N detection sub-signals through the N reflection ports of the planar lightwave circuit filter array; or,
receiving the N service sub-signals through the N reflection ports of the planar lightwave circuit filter array, and receiving the N detection sub-signals through the N transmission ports of the planar lightwave circuit filter array;
combining the N service sub-signals and the N detection sub-signals into N target sub-signals through the N thin film filter chips of the thin film filter chip module, wherein each of the target sub-signals comprises one detection sub-signal and one service sub-signal; and
outputting the N target sub-signals through the N common ports of the planar lightwave circuit filter array.

19. A system for processing optical signals of a passive optical network, comprising:
M stages of optical splitters, wherein the M stages of optical splitters comprise a ith stage optical splitter and (i+1)th stage optical splitters, the ith stage optical splitter and the (i+1)th stage optical splitters are the optical splitter of a passive optical network according to any one of claims 1 to 10, and each branch port of the ith stage optical splitter is connected to a common port of one (i+1)th stage optical splitter, wherein M is an integer greater than 1, and i is any integer from 1 to M-1; and
in a case where each of the ith stage optical splitter comprises N branch ports, each of the branch ports of the ith stage optical splitter is connected to a common port of N (i+1)th stage optical splitters.

20. The system according to claim 19, wherein
the ith stage optical splitter is used for splitting the optical signals into N target signals having different wavelength ranges, wherein N thin film filter chips in the ith stage optical splitter have different preset transmission wavelength ranges, or the ith stage optical splitter comprises a multichannel wavelength division multiplexer; and
the N (i+1)th stage optical splitters are used for splitting the target signals into a plurality of target sub-signals having different wavelengths, wherein a plurality of thin film filter chips in the (i+1)th stage optical splitters have different preset transmission wavelengths, or the (i+1)th stage optical splitters comprise arrayed waveguide gratings.
